(19) Europäisches Patentamt
European Patent Office
Office européen des brevets

(11) **EP 4 708 066 A1**

(12) **EUROPEAN PATENT APPLICATION**

(43) Date of publication:
**11.03.2026 Bulletin 2026/11**

(21) Application number: **25194349.4**

(22) Date of filing: **06.08.2025**

(51) International Patent Classification (IPC):
**G06F 16/22** *(2019.01)*

(52) Cooperative Patent Classification (CPC):
**G06F 16/2246**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.09.2024 KR 20240120801
04.06.2025 KR 20250072754**

(71) Applicant: **Electronics and Telecommunications
Research Institute
Daejeon 34129 (KR)**

(72) Inventors:
• **Jang, Mi Young**
 **Daejeon 34129 (KR)**
• **Kim, Ji Yong**
 **Daejeon 34129 (KR)**
• **Sul, Dong Myung**
 **Daejeon 34129 (KR)**
• **Choi, Beongjun**
 **Daejeon 34129 (KR)**
• **Won, Jongho**
 **Daejeon 34129 (KR)**

(74) Representative: **Betten & Resch
Patent- und Rechtsanwälte PartGmbB
Maximiliansplatz 14
80333 München (DE)**

(54) **INDEX SERVER, USER TERMINAL, AND METHOD OF INDEXING BLOCKCHAIN TRANSACTION DATA**

(57) The provided index server indexes two-dimensional (2D) location data included in the transaction data as a K-d-B tree, constructs partial Merkle trees for a group of leaf nodes in the K-d-B tree, and stores hierarchical hash information based on the partial Merkle trees in each of nodes of the K-d-B tree. When a query related to the location data is acquired via the interface module, the index server searches the K-d-B tree to find a query result corresponding to the acquired query, and generates verification data for verifying the searched query result on the basis of the partial Merkle trees and the hierarchical hash information. The index server then provides the query result and the verification data to the user terminal to verify the integrity of the query result using the partial Merkle trees and the hierarchical hash information by the user terminal.

FIG. 3

**Description**

CROSS-REFERENCE TO RELATED APPLICATION

This application claims priority to and the benefit of Korean Patent Applications No. 2025-0072754, filed on June 4, 2025, and No. 2024-0120801, filed on September 5, 2024, the disclosure of which is incorporated herein by reference in its entirety.

BACKGROUND

**1. Field of the Invention**

Various embodiments disclosed in the present document relate to a blockchain indexing technology.

**2. Discussion of Related Art**

Blockchain technology is a key technology of the Fourth Industrial Revolution and is gaining global attention as a way to record and manage data securely and transparently. Blockchain is a decentralized digital ledger technology for distributedly storing data across all users participating in a network, sharing all records of data. One of the key features of blockchain is that once data is recorded, it cannot be modified or deleted but can only be appended with new data. Due to this characteristic, blockchain ensures the immutability, integrity, transparency, reliability, and the like of data and maximizes data safety, which enables blockchain to be utilized as a reliable distributed ledger system.

Blockchain-based services are made possible through searches and analysis of blockchain data in response to user queries. However, as the amount of blockchain data continues to grow over time, the need for efficiently search and analysis of large amount of blockchain data is also increasing. Blockchains of Bitcoin, Ethereum, and the like use key-based LevelDB developed by Google to provide their own search functions for transactions, blocks, and account information.

SUMMARY OF THE INVENTION

However, current block chain search functions allow limited one-dimensional (1D) searches and thus are inefficient for searching multidimensional data.

Also, blockchain analysis technology has the following limitations. For example, blockchain networks limit transaction performance by redundantly storing data on all participating nodes. Further, only basic block transaction access is allowed, and thus there is no index for advanced analysis. Moreover, a search function for stored data has low performance, and there are limited data access methods.

One embodiment of the present invention is directed to an index server for indexing two-dimensional (2D) location data included in a blockchain transaction as a K-d-B tree and verifying integrity of a query result using a partial Merkle tree of a corresponding leaf node, a user terminal, and a method of indexing transaction data.

According to an aspect of the embodiment, there is provided an index server including an interface module configured to interface with a user terminal, an index database (DB) for indexing transaction data stored in a blockchain network in block units, and a processor. The processor indexes 2D location data included in the transaction data as a K-d-B tree, constructs partial Merkle trees for a group of leaf nodes in the K-d-B tree, stores hierarchical hash information based on the partial Merkle trees in each of nodes of the K-d-B tree, when a query related to the location data is acquired via the interface module, searches the K-d-B tree to find a query result corresponding to the acquired query, generates verification data for verifying the searched query result on the basis of the partial Merkle trees and the hierarchical hash information, and provides the query result and the verification data to the user terminal such that the user terminal to verify integrity of the query result using the partial Merkle trees and the hierarchical hash information.

According to another aspect of the embodiment, there is provided a user terminal including a processor and a communication module configured to establish a communication channel to an index server which manages an index DB for indexing of transaction data stored in a blockchain network. The index DB indexes 2D location data included in the transaction data as a K-d-B tree, constructs partial Merkle trees for a group of leaf nodes in the K-d-B tree, and provides hierarchical hash information of the K-d-B tree on the basis of the partial Merkle trees in connection with each of nodes in the K-d-B tree, and the processor transmits a query related to the location data via the communication module, receives a query result and verification data which is provided by the index server as a result of searching the K-d-B tree for the query result wherein verification data includes the hierarchical hash information and construction-related information of the partial Merkle trees; and the query result includes searched leaf node; calculates root hash information of the K-d-B tree related to a searched leaf node using construction-related information and the hierarchical hash information, and verifies integrity of the query result on the basis of the calculated root hash information.

According to another aspect of the embodiment, there is provided a method of indexing blockchain transaction data by an index server, the method including indexing 2D location data in transaction data stored in a blockchain network in block units as a K-d-B tree, constructing partial Merkle trees for a group of leaf nodes in the K-d-B tree and storing hierarchical hash information based on the partial Merkle trees in each of nodes of the K-d-B tree, when a query related to the location data is acquired from a user terminal, searching the K-d-B tree to search a query result corresponding to the acquired query; generating verification data for verifying the searched query result on the basis of the partial Merkle trees and the hierarchical hash information; and providing the query result and the verification data to the user terminal to verify integrity of the query result using the partial Merkle trees and the hierarchical hash information by the user terminal.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 shows examples of integrity verification indexes based on a Merkle hash tree;
FIG. 2 is a conceptual diagram of a blockchain index system according to an exemplary embodiment;
FIG. 3 is a functional block diagram of an index server according to an exemplary embodiment;
FIG. 4 is a block diagram of an index server according to an exemplary embodiment;
FIG. 5 shows a distribution of two-dimensional (2D) location data and K-d-B tree partition region information corresponding thereto according to an exemplary embodiment;
FIG. 6 shows location data stored in a K-d-B tree in spatial polygons of the K-d-B tree according to an exemplary embodiment;
FIG. 7 shows an index database (DB) in which a K-d-B tree and Merkle trees are combined according to an exemplary embodiment;
FIG. 8 shows three main types of queries for location data according to an exemplary embodiment;
FIG. 9 is a diagram illustrating a method of searching for an exact-matching query (q1) according to an exemplary embodiment;
FIG. 10 shows an example of a method of searching for a range query (q2) according to an exemplary embodiment;
FIG. 11 shows a method of verifying correctness of a query result according to an exemplary embodiment;
FIG. 12 shows a method of verifying completeness of a query result according to an exemplary embodiment;
FIG. 13 is a table showing index-related costs proposed in a static situation in which transaction data is not updated frequently;
FIG. 14 shows an update cost of an index DB when transaction data is updated;
FIG. 15 is a block diagram of a user terminal according to an exemplary embodiment; and
FIG. 16 is a flowchart of a method of indexing blockchain transaction data according to an exemplary embodiment.

In relation to the description of drawings, similar reference numerals may be used for like components.

DETAILED DESCRIPTION OF EXEMPLARY EMBODIMENTS

Symbols used in the present document have the following meanings.

[Table 1]

| Symbol | Meaning |
|---|---|
| VO | Verification data for query result, verification object |
| h | Hash function |
| S | Electronic signature |
| p (small letter) | Two-dimensional (2D) data point (x, y) |
| P (capital) | Page size |
| f | Fanout number (maximum number of pieces of data included in one node) |
| d | Height of K-d-B tree |
| $N_D$ | Number of data records |

(continued)

| Symbol | Meaning |
|---|---|
| $N_Q$ | Number of leaf nodes (pages) accessed by tree |
| $N_R$ | Number of data records responding to query |
| $|s|$ | Size of signature |
| $|r|$ | Size of data record |
| $C_{\mathcal{H}|r|}$ | Cost of using hashing function |
| $C_{\sigma|h|}$ | Cost of signing message with a length of 2|h| |
| $C_\sigma$ | Cost of generating one signature |
| $C_{IO}$ | Disk input and output (I/O) cost per unit size |
| $C_{\sigma^\pi}$ | Cost of calculating aggregated signature |
| $C_{m^\pi}$ | Cost of verifying signature using aggregated signature $s^\pi$ |
| $C_{v_\pi}$ | Cost of verifying authenticity using public key of data owner |

Blockchain analysis tools and query technologies such as EtherQL, Amazon QLDB, and BigChainDB copy ledger data of a blockchain network to build and maintain a separate database (DB) (outsourced DB) outside the blockchain network. The outsourced DB is managed by utilizing a DB system (MongoDB, CouchDB, or the like) to lower a management cost and improve query processing efficiency. In addition, the outsourced DB may provide a user-friendly structured query language (SQL)-compatible query language for a query interface.

Here, the outsourced DB provides high efficiency in terms of query processing for blockchain but may have the following limitations and problems from the perspective of blockchain reliability.

(1) Since data is stored and managed in the external DB, there is a risk of original data leakage and data manipulation or omission.
(2) It is necessary to support efficient query processing while maintaining minimum data for query processing rather than copying and storing data of the entire ledger.
(3) There is a need for a technology that ensures correctness, reliability, and completeness of query results by utilizing an external DB and indexes.

Meanwhile, with the growing interest in cloud computing, active research is being conducted on DB outsourcing utilizing cloud computing.

DB outsourcing is a system structure in which data owners and a service provider are separated. The data owners build a DB, and the service provider manages the DB acquired from the data owners and provides an application service. In addition, an authenticated user may access data through the application service of the service provider and search for desired information. Here, since data owners entrust their asset data to a service provider, correctness and reliability of data has become a major issue.

A technique for verifying integrity of a query result from an outsourced DB in a cloud computing environment is a method for ensuring correctness of a query result and completeness of data. The correctness of a query result means that the query result actually exists in the source DB and has not been modified in any way. For a correct query result, it is necessary to confirm that all items in a result set are the same as the original data using verification data. The completeness of data represents that all items satisfying a query condition are returned. A complete result set is a set including all items to be included in a result in accordance with a query condition.

The correctness and the completeness of a query result may be verified using a query result integrity verification technique. The query result integrity verification technique is a technique for determining whether a service provider has not damaged (e.g., deleted or modified) data received from a data owner during a query processing process, and whether the service provider has returned a correct result for the user's query.

Representative examples of the query result integrity verification technique are a Merkle-hash tree-based verification technique and a signature-based verification technique. Each of the techniques will be described below.

1. Merkle-hash tree-based verification technique

A Merkle-hash tree-based data integrity verification technique is a technique proposed by R.C. Merkle, in which data is stored in a binary tree structure, and data integrity is ensured using a one-way hash function. In this method, hash information generated on the basis of each data tuple is stored in leaf nodes of the tree, and internal nodes concatenate hash information of child nodes. A root node of the tree represents signature information generated by a data owner, and the signature information is transmitted to authenticated users. A Merkle-hash-based query result integrity verification technique in an outsourced DB environment was proposed by P. T. Devanbu group. According to the corresponding study, when a query is performed, a service provider provides tree search information and an integrity verification data verification object (VO) to a user together with a query result. The user performs data integrity verification by analyzing the VO.

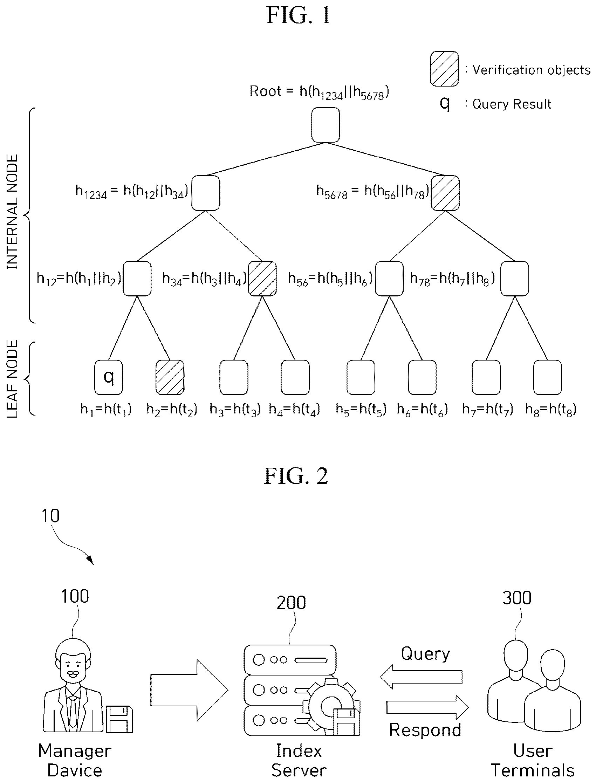

FIG. 1 shows examples of integrity verification indexes based on a Merkle hash tree. The Merkle-hash tree-based verification technique is the origin of a Merkle Patricia tree, which is utilized by blockchain networks such as Bitcoin, Ethereum, and the like to ensure data integrity. According to a Merkle tree, data is stored in a binary tree structure, and a one-way hash function is used. Here, hash information generated on the basis of each data tuple is stored in leaf nodes of a Merkle tree, and hash information of child nodes is concatenated in internal nodes. A root node of the Merkle tree represents hashes of all child node data as concatenated signature information, which is transmitted to authenticated users.

Referring to FIG. 1, integrity of query result data may be verified on the basis of a Merkle tree as follows.

First, when a user performs a query to retrieve a transaction t1, a query result returned to the user is t1, and query result verification data includes {h2, h34, h4578}. Since an authenticated user (user terminal) is aware of hash function information utilized to generate a query verification index and a root hash h_Root, h1 may be generated using t1. Therefore, the root hash may be generated by connecting the generated h1 and the hash {h2, h34, h5678} received as verification data and compared with a root hash h_Root received from a data owner to verify data integrity. Here, when the received root hash is identical to the root hash generated by the user, it is determined that the query result of which data integrity is ensured has been received.

2. Signature-based query result integrity verification technique

According to a signature-based query result integrity verification technique, a data owner generates a signature in each data tuple using his or her secret key and transmits a key for generating the signature to an authenticated user such that a query result may be verified.

Since this technique only requires a query result and signature information of data, the problem of increased verification data transmission costs caused by the tree-based technique is solved. In addition, since only a simple index is required for storing signature information, the problem of increased data update costs caused by tree-based indexes is also solved. For example, in the research of Narasimha and G. Tsudik, a signature chain acquired by connecting several data tuples is used to verify integrity of a query result. For example, when R5 is searched as a query result, data of an entire signature chain including R5 is transmitted, and integrity verification is performed through comparison. However, with an increase in the size of a data group included in a query result, the amount of data to be transmitted and computation overhead increase. Due to data transmission and computation overhead, the signature-based integrity verification technique may be difficult to apply to an environment with a large number of pieces of data.

A blockchain platform has technical features and merits such as transparency, reliability, and security of data and data processing through a smart contract. Due to these merits, blockchain technology is attracting attention as a technology that will revolutionize various industrial fields. In particular, storing location data on a blockchain is more important because the location data may be used as a means of tracking and auditing in logistics systems, smart cities, location-based services, medical services, and the like. For example, in medical services, it is possible to safely manage location information and movement routes of patients through a blockchain-based telemedicine and patient location tracking service, and in an emergency situation, it is possible to rapidly identify a location and take appropriate measures. In addition, there are a growing number of blockchain-based demonstrations in which location information is utilized such as real-time tracking of logistics and transportation, authenticated records of routes, traffic management systems in smart city applications, disaster countermeasures, and emergency services.

In these blockchain-based application services, it is important not only to store data reliably but also to provide search and analysis in various ways. In particular, since 2D location data is retrieved using queries based on spatial similarity, indexes in which these features are taken into consideration are required. However, current blockchain systems only support a search function for main information, such as blocks, transactions, and the like, and thus may be inefficient in searching for 2D data. Further, since location data grows rapidly in real time, it is necessary to design an index structure in which dynamic data is taken into consideration.

Blockchain is characterized by the fact that it guarantees reliability in the overall network but not in individual nodes. Accordingly, even when a node participating in a blockchain network performs index-based analysis, it is not guaranteed that there is no data manipulation such as tampering, deleting, addition, or the like at each node. Therefore, there is a need for a means for verifying integrity of a node participating in a blockchain network.

FIG. 2 is a conceptual diagram of a blockchain index system according to an exemplary embodiment. The blockchain index system of FIG. 2 may be a model of an outsourced DB.

Referring to FIG. 2, a blockchain index system 10 according to an exemplary embodiment may include a user terminal 300, a manager device 100, and an index server 200.

The user terminal 300 may be a computing device used by a blockchain service user. For example, the user terminal 300 may be a portable terminal, a smart pad, or a personal computer (PC).

The user terminal 300 may acquire a user query and transmit the acquired user query to the index server 200.

The manager device 100 may be a computing device used by a blockchain data manager (or a data owner). The manager device 100 may set management-target transaction data including 2D location data in a blockchain network, generate indexes by combining a K-d-B tree and Merkle trees for the transaction data set on the basis of location information in the transaction data using the index server 200, and store the generated indexes in an index DB of the index server 200. The Merkle tree may be constructed for each leaf node of the K-d-B tree, and each node of the K-d-B tree may store hierarchical hash information of the Merkle tree.

The index server 200 may be a blockchain-based application service provision server.

The index server 200 may support an indexing service for transaction data including location data and store indexed location data (or an index of location data or an index DB).

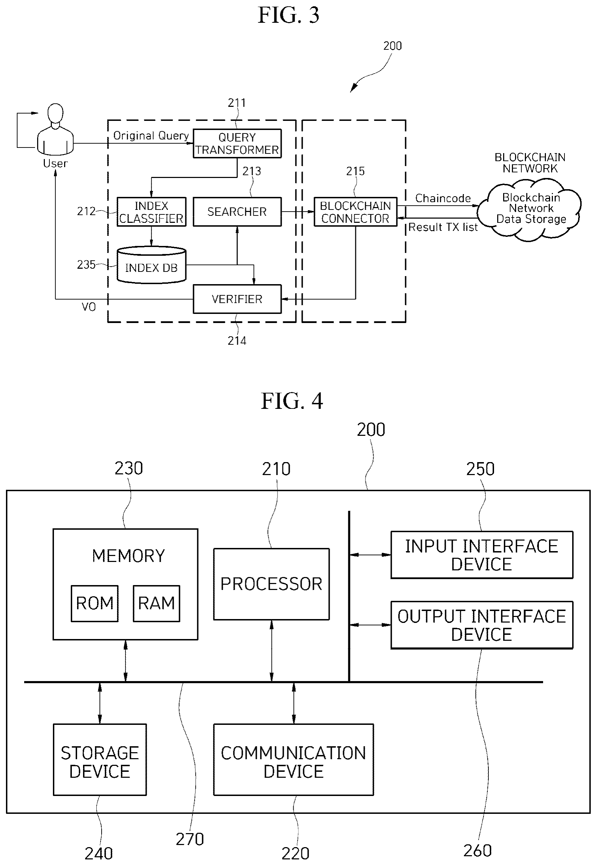

When a query is acquired from the user terminal 300, the index server 200 may find a query result (response data) on the basis of an index DB 235 (shown in FIG. 3) and generate verification data to verify integrity of the searched query result. The verification data may include hash information of nodes visited for the query search, uppermost hash information of unvisited nodes, and minimum information for Merkle tree construction.

The index server 200 provides the searched query result and the verification data to the user terminal 300.

Subsequently, when the query result (response data) corresponding to the query and the integrity verification data are received from the index server 200, the user terminal 300 may verify integrity (correctness and completeness) of the query result using the verification data.

As described above, the blockchain index system 10 according to an exemplary embodiment can not only index transaction data by combining a K-d-B tree and Merkle trees in consideration of features of 2D location data in the transaction data but can also provide a new blockchain data index structure for verifying integrity of a query result including correctness and completeness.

FIG. 3 is a functional block diagram of an index server 200 according to an exemplary embodiment.

Referring to FIG. 3, the index server 200 may further include a blockchain connector 215, a query transformer 211, an index classifier 212, a searcher 213, a verifier 214, and an index DB 235. The blockchain connector 215, the query transformer 211, the index classifier 212, the searcher 213, and the verifier 214 may be included in a processor 210 of FIG. 4 or may be software or hardware modules executed by the processor 210. Therefore, execution of the blockchain connector 215, the query transformer 211, the index classifier 212, the searcher 213, and the verifier 214 may be described below using the processor 210 as a subject.

The query transformer 211 may acquire an original query from the user terminal 300 and transform the acquired query into a query for data search. For example, the original query may be input as a human-friendly query language such as an SQL-like query statement, and the query transformer 211 may transform the input query language into a query that is interpretable by a processor (e.g., 210 of FIG.2).

The index classifier 212 may analyze the transformed query to determine whether the transformed query is a query utilizing an index based on location data. When the received query utilizes an index based on location data, the index classifier 212 may request a query search from the searcher 213.

The searcher 213 may search for an index satisfying a query condition through a binary tree search on a K-d-B tree and provide searched index information to the verifier 214. The searched index information may include at least one of location data and a transaction identifier (ID) stored in the searched node.

The searcher 213 may acquire transaction data (txList) corresponding to the transaction ID from a blockchain network (or a blockchain network storage) through the blockchain connector 215. The query result may be, for example, location data stored in a leaf node, the location data and the transaction ID, or transaction data corresponding to the transaction ID.

The verifier 214 may generate verification data (VO) for the query result and transmit the verification data to the user terminal 300. The verification data may include at least one of hash information of nodes visited during the search process, uppermost hash information of nodes other than the visited nodes (unvisited nodes), hash information related to construction(construction-related information) of a partial Merkle tree of the searched leaf node in the query result, and original root hash information of the K-d-B tree.

Meanwhile, when the index classifier 212 determines that the transformed query does not utilize an index based on location data, the searcher 213 may perform a query on the basis of a blockchain chaincode.

The user terminal 300 may analyze the verification data (VO) to verify integrity of the searched query result. When authentication is completed, the user terminal 300 may receive a public key and a hash function to be utilized in integrity verification from the index server 200.

FIG. 4 is a hardware block diagram of an index server according to an exemplary embodiment.

Referring to FIG. 4, the index server 200 may include at least one of the processor 210 communicating via a bus 270, a memory 230, an input interface device 250, an output interface device 260, and a storage device 240. The index server 200 may further include a communication device 220 coupled to a network. The processor 210 may be a central processing unit (CPU) or a semiconductor device that executes commands stored in the memory 230 or the storage device 240. The memory 230 and the storage device 240 may include various forms of volatile or non-volatile storage media. For example, the memory 230 may include a read-only memory (ROM) and a random access memory (RAM). In exemplary embodiments of the present disclosure, the memory 230 may be inside or outside the processor 210, and the memory 230 may be connected to the processor 210 through various known devices.

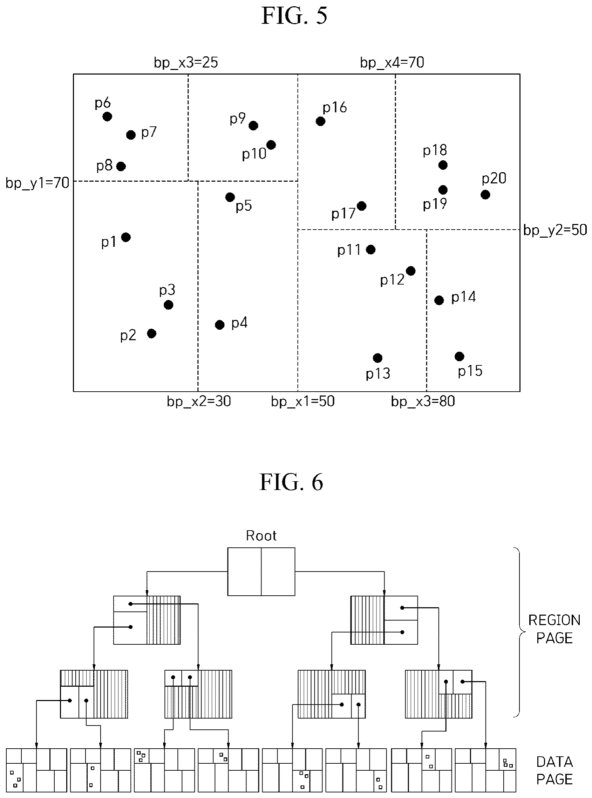

The memory 230 may include (or store) an index DB 235 including integrity verification indexes for transaction data that is stored in a blockchain network in block units. The index DB 235 may be built by indexing transaction data including 2D location data of a blockchain network as a combination structure of a K-d-B tree and Merkle trees on the basis of the location data. For example, the location data in the transaction data may be indexed as a K-d-B tree, partial Merkle trees may be constructed for data groups included in nodes in the K-d-B tree, and hierarchical hash information based on the constructed partial Merkle trees may be stored in nodes (leaf nodes and internal nodes) of the K-d-B tree such that the index DB may be prepared. The internal nodes including a root node in the K-d-B tree may store spatial partition information of the 2D location data, page IDs, and the hierarchical hash information acquired by concatenating all data hashes of lower nodes. Each of the leaf nodes in the K-d-B tree may store the location data, transaction IDs of the transaction data, and construction-related information of a partial Merkle tree on each of the leaf nodes. A combination structure of the K-d-B tree and the partial Merkle trees will be described below with reference to FIGS. 5 to 7.

The processor 210 may acquire a query related to location data from the user terminal 300 via the input interface device 250 (interface module). The type of acquired query may include at least one of an exact-matching query, a range query, and a k-nearest neighbor (k-NN) search query.

The processor 210 may perform a binary search on the K-d-B tree on the basis of the query to search a query result corresponding to the acquired query. The query result may include location data corresponding to the query.

According to an exemplary embodiment, the processor 210 may generate verification data for verifying the searched query result on the basis of a partial Merkle tree and the hierarchical hash information and provide the query result and the verification data to the user terminal 300 via the communication device 220. Subsequently, the user terminal 300 may verify integrity of the query result using the partial Merkle tree and the hierarchical hash information.

According to one exemplary embodiment, the processor 210 may generate the verification data including hash information of nodes visited during the search process, uppermost hash information of unvisited nodes, hash construction-related information of a partial Merkle tree of a searched leaf node in the query result, and original root hash information of the K-d-B tree. Accordingly, the user terminal 300 may calculate root hash information of the K-d-B tree using the partial Merkle tree of the searched leaf node and the hierarchical hash information and verify integrity (correctness) of the query result comparing with the original root hash information. In this case, the processor 210 may generate the verification data including minimum hash information excluding hash information calculable by the user terminal 300 using a public key or a hash function among a plurality of pieces of hash information in the verification data.

According to one exemplary embodiment, the processor 210 may generate and provide the verification data further including a signed copy of the original root hash information encrypted using a secret key to the user terminal 300. Accordingly, the user terminal 300 may verify integrity of the original root hash information using the previously acquired public key and the signed copy and then verify integrity of the index DB (or query result) on the basis of the verified original root hash information.

According to an exemplary embodiment, the processor 210 may build the index DB that further stores axis-specific neighbor data including x-axis next location data and y-axis next location data of the location data in each leaf node in the K-d-B tree together with the each location data. In this case, the processor 210 may provide verification data further including the axis-specific neighbor data. Accordingly, the user terminal 300 can verify completeness of the index DB on the basis of distinguishment between each piece of location data and the axis-specific neighbor data.

Additionally or alternatively, the processor 210 may sign the axis-specific neighbor data using a secret key and store the signed axis-specific neighbor data in each leaf node of the K-d-B tree in connection with each location data. In this case, the processor 210 may provide the verification data further including the location data included in the query result and neighbor data thereof to the user terminal 300. Accordingly, the user terminal 300 may verify completeness of the query result in connection with the location data and the neighbor data. For example, the user terminal 300 may verify the completeness of the query result by determining that the searched location data is different from the neighbor data or is not within a range of the neighbor data.

According to an exemplary embodiment, when an indexing range is set in a blockchain network during the process of building an index DB, the processor 210 may calculate at least one cost for transaction data corresponding to the indexing range among a storage cost of the index DB (or integrity verification indexes), a calculation cost of the index DB (or the integrity verification indexes), a generation cost of the verification data, and a reliability verification cost of the query result. The processor 210 may provide the at least one calculated cost to a manager (e.g., a data owner) related to building of an index DB.

In addition, the processor 210 may periodically check whether the transaction data within the set range is updated. When updated transaction data is checked, the processor 210 may calculate at least one cost for the updated transaction data. The processor 210 may output the calculated cost to the manager or the data owner. Subsequently, with the consent of the manager or the data owner, the processor 210 may update the index DB on the basis of location data in the updated transaction data.

In the above-described embodiment, the index server 200 has been mainly described with an index structure for 2D location data among spatial data. However, the index server 200 is not limited thereto. For example, the index server 200 may generate, configure, or use the data index structure to index and verify spatial data stored in the form of lines and polygons.

As described above, the index server 200 according to an exemplary embodiment generates verification information (hash information) for a data group of leaf nodes from a partial Merkle tree constructed for the leaf nodes of a K-d-B tree and then concatenates hash information of child nodes at an upper node in the K-d-B tree. Accordingly, by calculating and comparing root hash information with the original root hash information, it is possible to verify reliability and integrity of a query index and verify integrity (correctness) of a searched query result.

In addition, the index server 200 according to an exemplary embodiment can reduce not only a size of verification data transmitted together with a query result but also generation and update of hash information using partial Merkle trees for leaf nodes in an environment with frequent data updates such as a blockchain network.

Moreover, the index server 200 according to an exemplary embodiment can ensure integrity of a query result more stably by applying Merkle-tree-based integrity verification and signature-based integrity verification to verification data.

Further, the index server 200 according to an exemplary embodiment signs each of location data and neighbor data and stores the neighbor data in connection with each of location data during the process of building an index DB, and provides neighbor data to the user terminal together with a query result to further ensure completeness of the query result.

A method of indexing multidimensional data will be described below. Index structures of multidimensional data, such as 2D data, are roughly categorized into a point access method (PAM) and a spatial access method (SAM) depending on the approach. According to the PAM, multidimensional point data is stored, which is an approach for efficiently searching for multidimensional data. PAM index structures include a K-d tree, a grid file, locality sensitive hashing (LSH), and the like. The SAM is a method of storing multidimensional spatial data, which is appropriate for storage and indexing of a structure such as points, lines, and polygons. SAM index structures include an R-tree, a quad tree, a K-d tree, a K-d-B tree, and the like.

Query verification indexes are provided on the basis of location data, which corresponds to the SAM, and verification indexes based on a K-d-B tree among the SAM structures are used. In approaches for spatial data, it is necessary to consider the unique characteristic of spatial queries that search for neighboring objects in a specific space. Therefore, an index structure is necessary for managing the sizes of spatial objects using indexes. Since a K-d-B tree is a completely balanced tree, when data is inserted or deleted, balance of the tree may be maintained. Also, due to a node structure in which several pieces of data are stored simultaneously, disk access is minimized, which is useful in processing a large amount of dynamic data.

In addition, since a multidimensional space is partitioned and then stored, a K-d-B tree is suitable for range queries and k-NN search queries which are required for geographic information systems and multidimensional data analysis. Therefore, to efficiently store location data of a blockchain network, the index server 200 builds an index SB by adopting a K-d-B tree structure of the SAM as a basic structure of query result verification indexes. This will be described below with reference to the drawings.

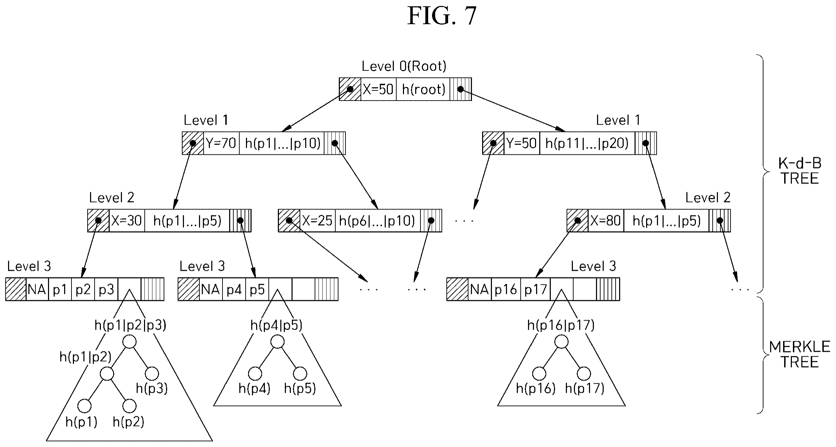

FIG. 5 shows a distribution of 2D location data and K-d-B tree partition region information corresponding thereto according to an exemplary embodiment. FIG. 6 shows location data stored in a K-d-B tree in terms of spatial polygons of the K-d-B tree according to an exemplary embodiment. FIG. 7 shows an index DB in which a K-d-B tree and Merkle trees are combined according to an exemplary embodiment.

A K-d-B tree is an index structure that combines characteristics of a K-d tree and a B+ tree and includes region pages and data pages in accordance with stored information.

In existing K-d-B trees, region pages correspond to a root node and intermediate nodes and include entries of "spatial partition information and page ID" pairs. In the case of a K-d-B tree, all data is stored only in leaf nodes, and the number of data stored in leaf nodes may be adjusted in accordance with a disk page size or a page size set by a user. A data page is a leaf node including an entry of a data information-address pair. The address may be a location in which a data record is stored in a blockchain network. The data information may be 2D location data. A K-d-B tree structure may be suitable for a frequently updated environment such as location data.

According to an exemplary embodiment, an index DB (integrity verification index) may construct partial Merkle trees for leaf nodes of a K-d-B tree to generate verification information (hash information) for data groups included in each of the leaf nodes and may store the generated verification information in connection with the leaf nodes. In addition, hash information of child nodes may be concatenated in an upper node of the K-d-B tree (also referred to as "hierarchical hash information" below). Accordingly, a region page (internal node) including a root node of the index DB may store spatial partition information, a page ID, and hierarchical hash information acquired by concatenating all data hashes of lower nodes. Data pages of the index DB may store location data, transaction IDs and partial Merkle tree information (e.g., see triangular parts of FIG. 7) of data groups included in the leaf nodes.

Referring to FIGS. 5 and 6, an index DB (query result verification indexes) according to an exemplary embodiment may include the same items as a K-d-B tree.

Referring to FIG. 7, a partial Merkle tree for group data included in each leaf node of a K-d-B tree may be added to the leaf node. For example, when a fanout of a query result verification index (or group data) is fs, a partial Merkle tree composed of fs pieces of data at maximum is generated for each leaf node. Each leaf node stores hash information related to construction of a partial Merkle tree, and internal nodes of the K-d-B tree store hierarchical hash information of partial Merkle trees.

Therefore, the index server 200 according to an exemplary embodiment may authenticate a query result using hierarchical hash information based on partial Merkle trees. For example, the user terminal 300 may repeat generating hash information of an upper node on the basis of each data (location data) and hash information of each node to calculate root hash information of a root node. In addition, the user terminal 300 may compare the root hash information with original root hash information to verify integrity of the query result.

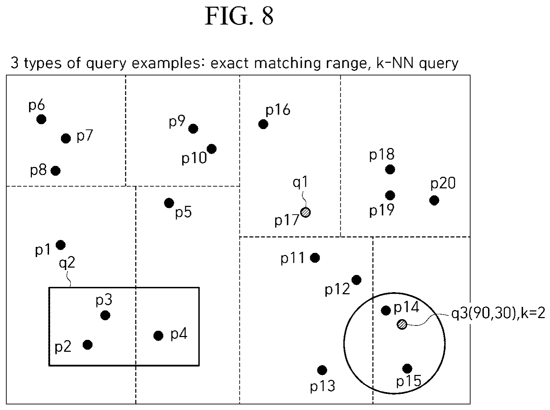

FIG. 8 shows three main types of queries for location data according to an exemplary embodiment.

There are roughly three types of queries for location data.

First, an exact-matching query (e.g., q1 of FIG. 8) is a query for searching for an object with specific spatial data coordinates, and is similar to a key search in a general DB. An exact-matching query may be used for determining whether a specific location or object exists.

Second, a range query (e.g., q2 of FIG. 8) is a query for searching for all objects within a given spatial range (in the form of a line, a quadrangle, a circle, or the like). A range query is very frequently used for multidimensional data and returns all objects within a given range in a 2D or higher-dimensional space.

Third, a k-NN search query (e.g., q3 of FIG. 8) is a query for searching for k neighbors nearest to a given query point. A k-NN search query is inevitably used for performing a distance-based search in application based on spatial data.

Accordingly, types of queries processible by the index server 200 according to an exemplary embodiment may include at least one of the exact-matching query, the range query, and the k-NN search query. Therefore, the index DB can support searches for the three types of queries and integrity verification for query results.

According to various embodiments, the index server 200 combines and extends an exact-matching query, a range query, and a k-NN search query and thereby can perform complex query processing such as a k-means algorithm and data clustering performed in data analysis.

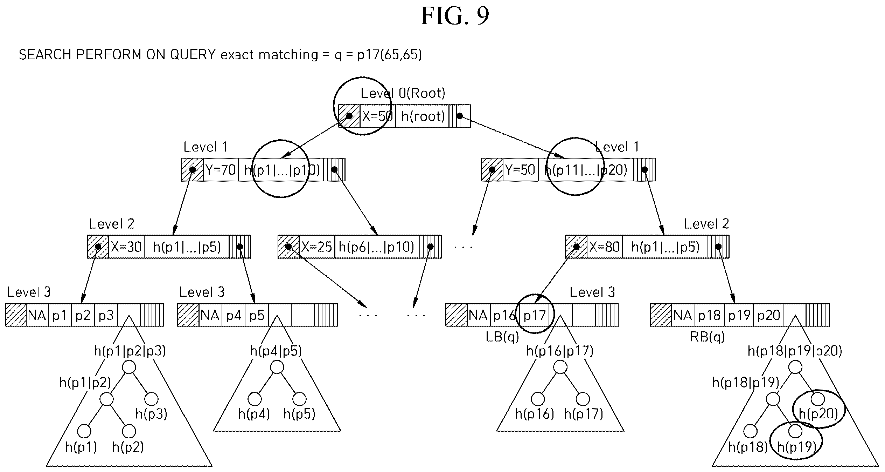

FIG. 9 is a diagram illustrating a method of searching for the exact-matching query q1 according to an exemplary embodiment.

Referring to FIG. 9, in response to a query q1 (65, 65), the index server 200 may find location data (p17) that satisfies a query result through a tree search (e.g., a breadth-first search).

[Expression 1]

$$Result(q1) = \{p17\}$$

Also, the index server 200 may generate verification data to verify integrity of a searched query result (p17). For example, the verification data may include hash information of nodes (indicated by circles) visited during the search process, uppermost hash information of unvisited nodes, original root hash information h(Root), and neighbor data (LB, RB) of the query result. The index server 200 may extract hash information from the nodes (indicated by circles) visited to search for the query result and extract uppermost hash information (h(p1|...|p10) of level 1) of the unvisited nodes. In addition, the index server 200 may extract hash information of data required for constructing a partial Merkle tree of the node searched as the query result. The index server 200 may generate verification data of Expression 2 including the extracted hash information.

[Expression 2]

$$VO = \{LB(q1) = p16, RB(q1) = p18, h(p19), h(p20), h(p1|\dots|p10), h(p11|\dots|p20), h(Root)\}$$

The index server 200 may transmit the searched query result Result(q1) and the verification data (VO) to the user terminal 300.

Meanwhile, the user terminal 300 may verify integrity of the query result using the verification data. For example, until hashes of all leaf nodes included in the query result are calculated, the user terminal 300 may repeat generating a hash of a leaf node by calculating a hash of data and grouping hash information. When hash information of all the leaf nodes included in the query result is generated, the user terminal 300 may calculate a generated hash of a parent node of the leaf nodes. The user terminal 300 may calculate a hash value of a root by combining the calculated hash information of the nodes with the uppermost hash information of all nodes (unvisited nodes) not included in a query search path. The user terminal 300 may determine whether the calculated root hash information is identical to the original root hash information.

When the calculated root hash information is identical to the original root hash information, the user terminal 300 may determine whether a value of neighbor data ($LB(q1) = p16$, $RB(q1) = p18$) is outside of the query result. When the value of the neighbor data is not included in the query result, the user terminal 300 may determine that integrity of the query result is ensured in terms of correctness and completeness.

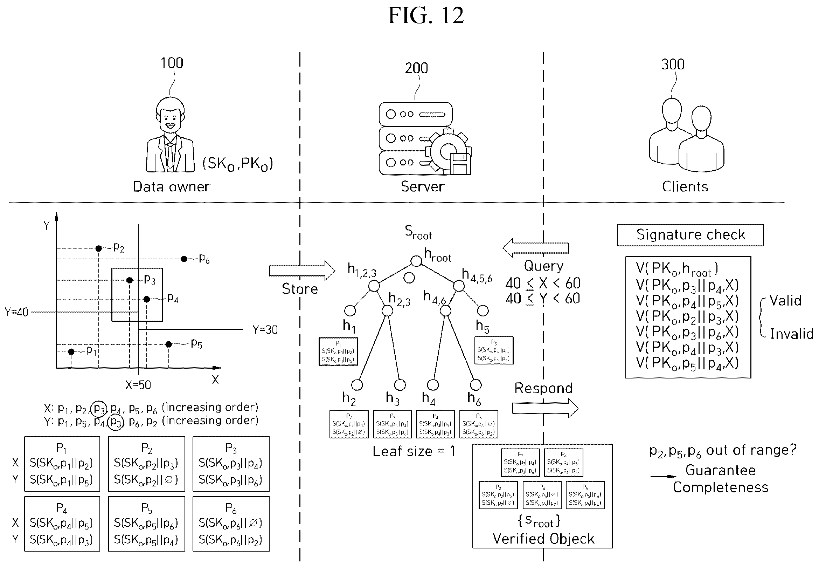

FIG. 9 illustrates a case of selecting nearest neighbor data on each of x and y axes among location data sharing an upper node of leaf nodes searched in a K-d-B tree. However, neighbor data may be the nearest data among all location data. To this end, it is necessary to store each location data in connection with neighbor data during building of an index DB. This will be described below with reference to FIG. 12.

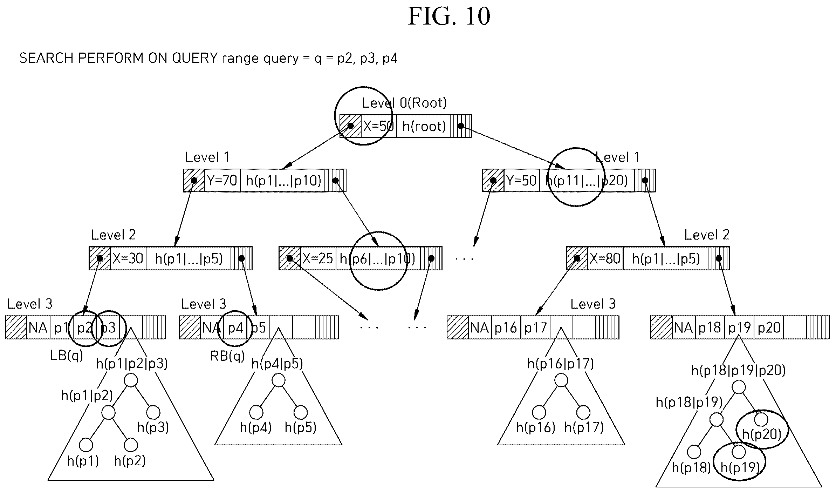

FIG. 10 shows an example of a method of searching for the range query q2 according to an exemplary embodiment.

Referring to FIG. 10, when a query range q2 ((10, 10), (4, 30)) is acquired from the user terminal 300, the index server 200 may perform a tree search related to the acquired query range and consequently find data (p2, p3, p4) satisfying a query result as shown in Expression 3 below.

[Expression 3]

$$Result(q2) = \{p2, p3, p4\}$$

The index server 200 additionally generates integrity verification data VO of the searched query result and transmits the integrity verification data (herein after, referred to 'verification data') VO to the user terminal 300. The verification data VO may include nodes indicated by circles, data information, and neighbor data (LB, RB) of the query result.

[Expression 4]

$$VO = \{LB(q2) = p1, RB(q2) = p4, h(p6|\dots|p10), h(p11|\dots|p20), h(Root)\}$$

Meanwhile, in the case of the k-NN search query q3 shown in FIG. 8, only an operation of searching for k nearest neighbors from an initial query point is added, and a subsequent process may be the same as in the case of a range query. Therefore, further details of the process will be omitted.

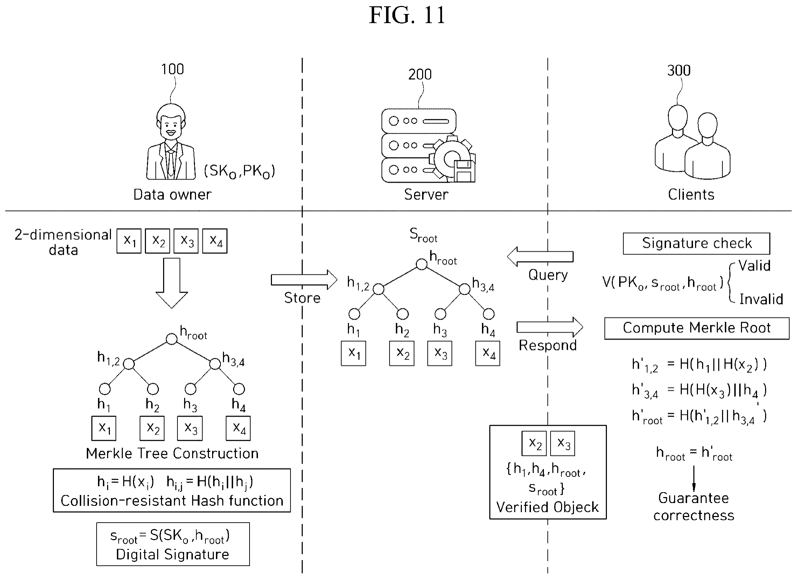

FIG. 11 shows a method of verifying correctness of a query result according to an exemplary embodiment. For convenience of description, a fanout number $f$ of a leaf node is set to 1 in the present document. As described above, correctness means that response data (a query result) of the index server 200 for a user query (client query) has not been manipulated.

First, a data owner constructs a Merkle tree on the basis of 2D location data that he or she has. The data owner signs a Merkle root $h_{root}$ of the derived Merkle tree and stores a corresponding signature value $s_{root}$ and the entire Merkle tree in the index server 200. In this case, the Merkle tree is stored in a leaf node of a K-d-B tree.

When a user query is received, the index server 200 may search for a query result (response data) corresponding to the query and generate verification data (VO) for verifying a searched query result. The index server 200 may transmit the query result and the verification data to the user terminal 300. The verification data is data for determining whether the query result is authentic, and may include the Merkle root signature value $s_{root}$ and minimum information required for Merkle root construction. The minimum information may include, for example, hash information of nodes visited during the search process, uppermost hash information of unvisited nodes, original root hash information h(Root), and neighbor data (LB, RB) of the query result.

When the query result and the verification data are acquired, the user terminal 300 may determine correctness of the query result as follows. The user terminal 300 may verify whether the Merkle root value $h_{root}$ acquired from the index server 200 has been tampered with using a signature (public key) of the data owner.

In addition, the user terminal 300 recalculates root hash information (a root value of the Merkle tree) using the query result and the verification data (VO) and compares the recalculated root hash information with the original root hash information acquired from the index server 200. When the two pieces of root hash information are identical, correctness of the query result is ensured due to characteristics of collision resistance hash functions

FIG. 12 shows a method of verifying completeness of a query result according to an exemplary embodiment. Completeness means that there is no missing data in a query result (response data) of the index server 200 corresponding to a user query.

A data owner (the manager device 100, or the index server 200 depending on control by the data owner) may independently sort data in ascending order for two dimensions (X, Y) of 2D data. The data owner (the manager device 100) may generate a signed copy of subsequent data of each piece of sorted data using a secret key through the index server 200 and store the signed copy of subsequent data (neighbor data) in connection with the sorted data. For example, subsequent X-axis data of data $p_3$ is $p_4$, and subsequent Y-axis data is $p_6$. Therefore, hash information of the data $p_3$ is concatenated with hash information of neighbor data $p_4$ and $p_6$ on each axis. Also, the data $p_3$ is stored together with a signed X-axis neighbor data copy $S(p_3|p_4)$ thereof and a signed Y-axis neighbor data copy $S(p_3|p_6)$ thereof. When data is the largest value in a specific dimension, a null (Ø) value is added for signing. The data owner constructs a Merkle tree with signed data and stores, in an index DB, hierarchical hash information of a Merkle tree of each node in a K-d-B tree.

When a 2D range query is acquired from the user terminal 300, the index server 200 may generate verification data including not only data within the acquired range but also axis-specific (or dimension-specific) neighbor data and provide the verification data to the user terminal 300.

The user terminal 300 may verify completeness of a query result using the following method. The user terminal 300 restores the neighbor data included in the verification data using a signature (public key) of the data owner. The user terminal 300 may compare location data corresponding to the query data and the neighbor data with a query range. For example, when all data corresponding to the query result is within the query range and all neighbor data corresponding to the query result (or checked using the verification data) is outside of the query range, the user terminal 300 may determine that the response of the index server 200 for the query satisfies completeness.

As described above, the index server 200 according to an exemplary embodiment is designed to have the same structural features as an outsourced DB interoperating with a blockchain network and can increase not only completeness and correctness of a query result but also query processing performance and efficiency by applying a query result verification algorithm.

In addition, the index server 200 according to an exemplary embodiment can increase query efficiency by placing an index server for storing minimum information required for each query type in a query processing server.

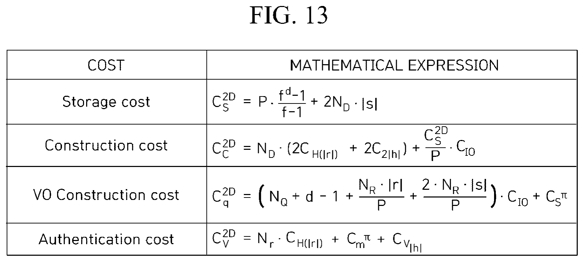

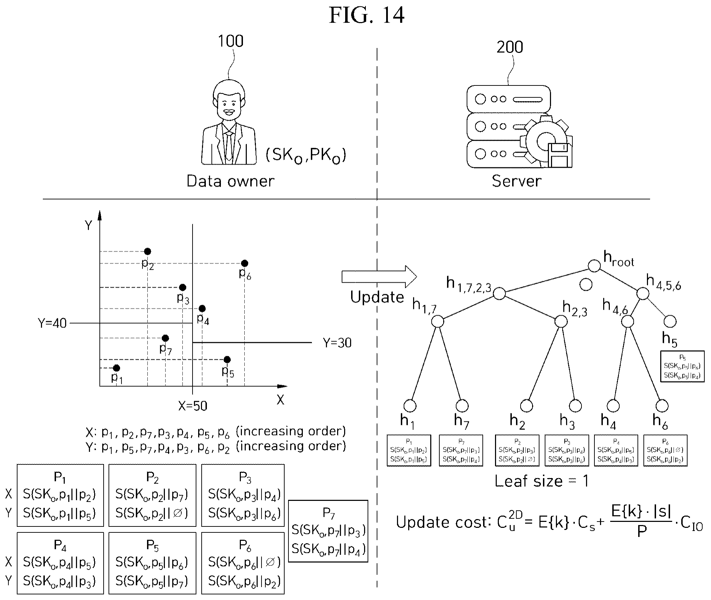

Costs related to building and utilization of an index DB according to an exemplary embodiment will be described below with reference to FIGS. 13 and 14.

To generate and utilize indexes based on location data of blockchain transaction data, storage and processing costs of indexes are incurred. Before building or updating an index DB, the index server 200 according to an exemplary embodiment may provide a cost of building and utilizing an index DB to a data owner. Therefore, the data owner may first consider costs of utilizing indexes in a static data environment and a dynamic data environment to perform a system update or determine whether to apply indexes.

FIG. 13 is a table showing index-related costs proposed in a static situation (static data environment) in which transaction data is not updated frequently. The index-related costs may include at least one cost among a storage cost of an index DB for transaction data corresponding to a set indexing range, a calculation cost of the index DB, a generation cost of the verification data, and a verification cost of the user terminal 300 for the verification data.

First, the storage cost (

$$C_S^{2D}$$

) is a size of a query result integrity verification index (index DB), representing a communication load between a data owner and the index server 200 and storage overhead of the index server 200. A storage cost additionally required for verifying correctness and completeness of data rather than a size of the data is as follows.

[Expression 5]

$$C_{s}^{2D} \cong P \cdot \frac{f^{d} - 1}{f - 1} - 2N_{D} \cdot |s|$$

In Expression 5 above, the storage cost includes a size of a K-d-B tree and a size of a signature, and the size of the K-d-B tree is calculated as shown in Expression 6. Here, P is a page size, and f is a fanout number (a maximum number of branches from one leaf node). Also, the size of a signature is represented as $2N_{D} \cdot |s|$ because it is necessary to additionally store two signatures (original root hash information and a signed copy thereof) for each data record. Here, $N_{D}$ is the number of data records (the number of pieces of group data of leaf nodes), and $|s|$ is a size of a signature. The cost expression shows a value calculated by considering a case where a K-d-B tree is in a full-node state, that is, all nodes are full, and thus is an upper-bound value that approximates an actual storage cost.

[Expression 6]

$$P(1 - f - f^{2} - \cdots - f^{d-1}) = P \cdot \frac{f^{d} - 1}{f - 1}$$

Second, the construction cost (

$$C_{c}^{2D}$$

) is a calculation cost of generating a query result integrity verification index, and may be calculated as shown in Expression 7 below. The construction cost (

$$C_{c}^{2D}$$

) roughly includes a signature calculation cost, a bulk-loading cost of loading data into a K-d-B tree, and an I/O cost of storing an index structure. Among the costs, the cost of bulk-loading data is much lower than the other two costs and thus is negligible.

[Expression 7]

$$C_{c}^{2D} = N_{D} \cdot \left(2C_{\mathcal{H}|r|} - 2C_{\Sigma|h|}\right) - \frac{C_{s}^{2D}}{P} \cdot C_{IO}$$

Here, $N_{D} \cdot (C_{\mathcal{H}|r|} - C_{\Sigma|h|})$ is the signature calculation cost, $N_{D}$ is the number of data records, $C_{\mathcal{H}|r|}$ is a cost of using a hashing function, and $C_{\Sigma|h|}$ is a cost of signing a message with a length of $2|h|$.

$$\frac{C_{s}^{2D}}{P} \cdot C_{IO}$$

is an I/O cost of storing data with a size of

$$C_{s}^{2D}$$

Third, the verification data generation cost (

$$c_g^{VD}$$

) is a computing cost for a server to search for a query result of a client. As shown in Expression 8 below, the verification data generation cost may be calculated using a disk I/O cost of searching for a K-d-B tree, a cost of extracting necessary data and a signature, and a cost of generating an aggregated signature.

[Expression 8]

$$c_g^{VD} = \left( N_Q - d - 1 - \frac{N_R \cdot |r|}{P} - \frac{2 \cdot N_R \cdot |s|}{P} \right) \cdot c_{IO} - c_{s\pi}$$

In Expression 8, $N_O$ is the number of accessed leaf node's pages, $d$ is a height of a K-d-B tree, $N_R$ is a size of a query result, $|r|$ is a size of a data record, $|s|$ is a size of a signature, $|P|$ is a size of a page, $c_{IO}$ is an I/O cost per unit size, and $c_{s\pi}$ is a cost of calculating an aggregated signature.

A size of the verification data may be the sum of a size of a result set (query result) and a size of the aggregated signature and may be calculated as shown in Expression 9 below.

[Expression 9]

$$|VO| = N_R \cdot |r| - |s|$$

Here, $N_R$ is the number of data records, $|r|$ is a size of data records, and $|s|$ is a size of a signature.

Lastly, the reliability verification cost (

$$c_r^{VD}$$

) is a cost for the user terminal 300 to verify correctness and completeness of the query result on the basis of the query result of the verification data. The reliability verification cost may be calculated as a cost of calculating a hash function and a cost of verifying an aggregated signature as shown in Expression 10 below.

[Expression 10]

$$c_r^{VD} = N_r \cdot c_{\mathcal{H}|r|} - c_{m\pi} - c_{V_\pi}$$

In Expression 10, $N_r$ is the number of data records,

$$c_{\mathcal{H}|r|}$$

is a cost of using a hash function of a data record with a length of $|r|$,

$$\mathcal{C}_{m^{\pi}}$$

is a cost of verifying a signature using $s^\pi$, and $\mathcal{C}_{v_\pi}$ is a cost of verifying authenticity using a data owner's public key.

FIG. 14 shows an update cost of an index DB when transaction data is updated. Since blockchain only allows data addition, data deletion is not taken into consideration.

In a dynamic environment, the index server 200 may update an index DB on the basis of updated blockchain data (transaction data) at specified time intervals (periodically).

An update cost includes a cost of calculating a signature calculation cost and generating a new signature and an I/O cost.

As shown in FIG. 14, when one new data record is added, 4 signatures are additionally necessary in total (it is necessary to update two records neighboring a data record added to each dimension). The number of signatures updated when k records are simultaneously added is $E\{k\}$. When neighbor data is further included, an updated signature may be required for the 4 nearest points at most, and thus the following inequality holds.

[Expression 11]

$$E\{k\} \leq 4$$

In addition, since an I/O cost additionally required for the update is $\frac{E\{k\} \cdot |s|}{P} \cdot \mathcal{C}_{IO}$, a total update cost ( $\mathcal{C}_u^{2D}$ ) may be calculated as shown in Expression 12 below.

[Expression 12]

$$\mathcal{C}_u^{2D} = E\{k\} \cdot \mathcal{C}_s - \frac{E\{k\} \cdot |s|}{P} \cdot \mathcal{C}_{IO} \leq 4\mathcal{C}_s - \frac{E\{k\} \cdot |s|}{P} \cdot \mathcal{C}_{IO}$$

Here, $|s|$ is a size of a signature, $|P|$ is a size of a page, $\mathcal{C}_s$ is a cost of generating one signature, and $\mathcal{C}_{IO}$ is an I/O cost for a unit size.

The index server 200 may output at least one cost to the data owner or another manager of the index server 200. Accordingly, the data owner may be supported in determining whether to build an index DB or check efficiency of an index DB. Alternatively, the other manager may additionally allocate computing resources of the index server 200 or assist in calculating a fee for the service.

As described above, before building or updating an index DB, the index server 200 provides various cost models for storage, processing, update, and the like of transaction data to be indexed, supporting a data owner in determining whether to build a system and update computing resources.

In addition, the index server 200 can assist in evaluating index management costs and selecting an optimal index structure in accordance with data updates when indexes are applied in a static environment and a dynamic data environment.

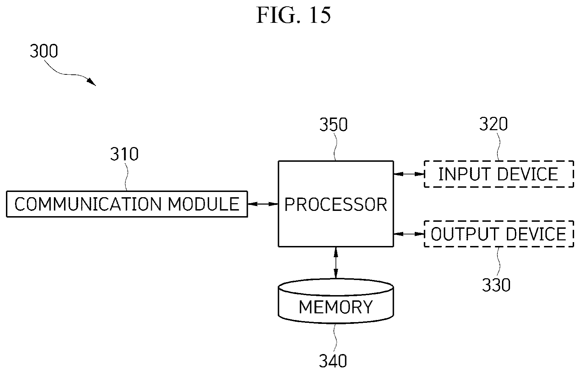

FIG. 15 is a block diagram of a user terminal according to an exemplary embodiment.

Referring to FIG. 15, the user terminal 300 according to an exemplary embodiment may include a communication module 310, a memory 340, and a processor 350. According to an exemplary embodiment, some components of the user terminal 300 may be omitted, or additional components may be included. Also, some of the components of the user terminal 300 may be combined into one entity but may perform functions of the corresponding components before the combination in the same way.

The input device 320 may receive an input of a user who uses the user terminal 300. The input device 320 may include an input detection circuit of at least one of a button, a touchscreen, and a microphone.

The output device 330 may visually or audibly output at least one kind of data among symbols, numerals, or characters in accordance with control of the processor 350. The output device 330 may include at least one of, for example, a liquid crystal display (LCD), an organic light-emitting diode (OLED) display, a touchscreen display, and a speaker.

The communication module 310 may support establishment of a communication channel or a wireless communication channel between the user terminal 300 and another device (e.g., the index server 200) and communication via the established communication channel. The communication channel may include at least one of, for example, local area network (LAN), fiber to the home (FTTH), x-digital subscriber line (xDSL), wireless broadband (WiBro), wireless LAN, Wi-Fi, Bluetooth, ZigBee, Wi-Fi direct (WFD), ultrawideband (UWB), Infrared Data Association (IrDA), Bluetooth Low Energy (BLE), near field communication (NFC), 3rd Generation (3G), 4th Generation (4G), and 5th Generation (5G) communication channels.

The memory 340 may include various volatile memories or non-volatile memories. For example, the memory 340 may include a ROM and a RAM. According to an exemplary embodiment, the memory 340 may be inside or outside the processor 350 and connected to the processor 350 through various known devices. The memory 340 may store various data used by at least one component (e.g., the processor 350) of the user terminal 300. The data may include, for example, software and input data or output data for commands related to the software. For example, the memory 340 may store at least one instruction and data to provide a location data search service based on the index server 200. For example, the memory 340 may store an instruction and data related to execution of a designated application using an index based on location data.

The processor 350 may control at least one other component (e.g., a hardware or software component) of the user terminal 300 and perform various types of data processing or computation. The processor 350 may include at least one of, for example, a CPU, a graphics processing unit (GPU), a microprocessor, an application processor, an application-specific integrated circuit (ASIC), and a field programmable gate array (FPGA) and may have a plurality of cores. The processor 350 may search for transaction data through the index server 200 by executing the designated application.

The processor 350 may acquire a user query through the input device 320 and transmit the acquired query to the index server 200 through the communication module 310. The query may include at least one of an exact-matching query, a range query, and a k-NN search query.

The processor 350 may receive a query result and verification data searched by the index server 200, calculate root hash information of a K-d-B tree related to a searched leaf node included in the query result using construction-related information of a partial Merkle tree and hierarchical hash information included in the verification data. And the processor 350 may verify integrity of the query result on the basis of the calculated root hash information. For example, the processor 350 may calculate hash information of leaf nodes related to the searched leaf node on the basis of the verification data, calculate root hash information of the K-d-B tree using the calculated hash information and the hierarchical hash information, and compare the calculated root hash information with original root hash information to verify the integrity of the query result.

Additionally, about the original root hash information, the processor 350 may acquire the verification data including a signed copy of the original root hash information that is encrypted using a secret key. In case, the processor 350 may verify the integrity of the original root hash information using a previously acquired public key and the signed copy and then compare the verified original root hash information with the calculated root hash information to verify the integrity of the query result.

In addition, the processor 350 may acquire the verification data further including not only the location data of each leaf node in the K-d-B tree but also axis-specific neighbor data including x-axis next location data and y-axis next location data of the location data. The processor 350 may verify completeness of an index DB on the basis of continuity or distinguish between each piece of location data included in the searched leaf node and the axis-specific neighbor data.

Additionally or alternatively, the processor 350 may acquire the verification data including the axis-specific neighbor data signed using a secret key. When the query is a range query, the processor 350 may verify completeness of the index DB by checking whether all the axis-specific neighbor data included in the verification data is outside of the corresponding range.

The processor 350 may output an integrity verification result of the query result (whether it fails in authentication) through the output device 330. Also, the processor 350 may output the query result through the output device 330.

When the integrity of the query result is verified, the processor 350 may acquire the transaction data from a blockchain network on the basis of a transaction ID included in the searched query result. Alternatively, when the integrity is verified, the processor 350 may acquire the transaction data included in the query result through the index server 200.

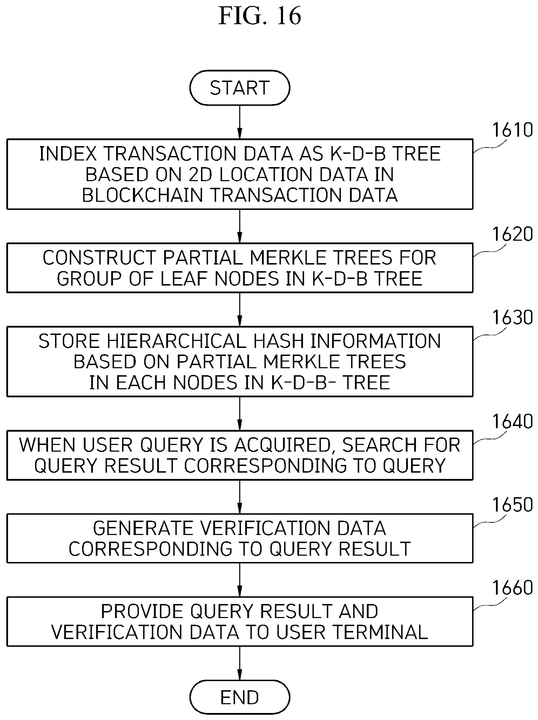

FIG. 16 is a flowchart of a method of indexing blockchain transaction data according to an exemplary embodiment.

Referring to FIG. 16, in operation 1610, the index server 200 may index 2D location data in transaction data stored in a blockchain network in block units as a K-d-B tree.

In operation 1620, the index server 200 may construct partial Merkle trees for a group of leaf nodes in the K-d-B tree.

In operation 1630, the index server 200 may store hierarchical hash information based on the partial Merkle trees in each of nodes of the K-d-B tree.

In operation 1640, when a query related to the location data is acquired from the user terminal 300, the index server 200 may search a query result corresponding to the acquired query by searching for the K-d-B tree.

In operation 1650, the index server 200 may generate verification data for verifying the searched query result on the basis of the partial Merkle trees and the hierarchical hash information.

In operation 1660, the index server 200 may provide the query result and the verification data to the user terminal 300.

It is to be understood that various embodiments of the present document and terms used in the embodiments are not intended to limit technological features set forth herein to specific embodiments and include various changes, equivalents, or substitutions for a corresponding embodiment. With regard to the description of the drawings, similar reference numerals may be used to refer to similar or related components. A singular form of a noun corresponding to an item may include one or more of the items unless the relevant context clearly indicates otherwise. As used herein, each of phrases such as "A or B," "at least one of A and B," "at least one of A or B," "A, B, or C," "at least one of A, B, and C," and "at least one of A, B, or C" may include any one of or all possible combinations of items enumerated together in a corresponding one of the phrases. Terms such as "1st" and "2nd," or "first" and "second" may be used to simply distinguish a corresponding component from another, and do not limit the components in other aspects (e.g., importance or order). When a (e.g., first) component is referred to, with or without the term "functionally" or "communicatively," as "coupled" or "connected" to another (e.g., second) component, it means that the first component may be coupled to the second component directly (e.g., by wire), wirelessly, or via a third component.

As used herein, the term "module" may include a unit implemented in hardware, software, or firmware, and may interchangeably used with other terms, for example, "logic," "logic block," "part," or "circuitry." A module may be a single integral component or a minimum unit or part thereof that performs one or more functions. For example, according to an embodiment, a module may be implemented in the form of an ASIC.

Various embodiments of the present document may be implemented as software (e.g., a program) including one or more instructions stored in a storage medium (e.g., an internal memory, an external memory, or a memory (the memory 230 of FIG. 4)) that is readable by a machine (e.g., an electronic device). For example, a processor (e.g., the processor 210) of the machine (e.g., the index server 200) may invoke at least one of the one or more instructions stored in the storage medium and execute the at least one invoked instruction. This allows the machine to be operated to perform at least one function according to the at least one invoked instruction. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not distinguish between a case where data is semi-permanently stored in the storage medium and a case where data is temporarily stored in the storage medium.

According to an exemplary embodiment, a method according to various embodiments disclosed in the present document may be included and provided in a computer program product. The computer program product may be traded as a product between a seller and a buyer. The computer program product may be distributed in the form of a machine-readable storage medium (e.g., compact disc (CD)-ROM) or distributed (e.g., downloaded or uploaded) online via an application store (e.g., Play Store™) or directly between two user devices (e.g., smartphones). When the computer program product is distributed online, at least a part of the computer program product may be temporarily generated or at least temporarily stored in the machine-readable storage medium, such as memory of the manufacturer's server, a server of the application store, or a relay server.

Components according to various embodiments of the present document may be implemented in the form of hardware such as a digital signal processor (DSP), an FPGA, or an ASIC and perform certain roles. Components are not limited to software or hardware, and each component may be configured to reside in an addressable storage medium or run on one or more processors. As an example, components may include components, such as software components, object-oriented software components, class components, and task components, processes, functions, attributes, procedures, subroutines, segments of program code, drivers, firmware, microcode, circuitry, data, DBs, data structures, tables, arrays, and variables.

According to various embodiments, each of the above-described components (e.g., modules or programs) may include a single entity or a plurality of entities. According to various embodiments, one or more of the above-described components or operations may be omitted, or one or more other components or operations may be added. Alternatively or additionally, a plurality of components (e.g., modules or programs) may be integrated into a single component. In this case, the integrated component may still perform one or more functions of the plurality of components in the same or similar manner as they are performed by the corresponding components among the plurality of components before the integration. According to various embodiments, operations performed by a module, a program, or another component may be carried out sequentially, in parallel, repeatedly, or heuristically, or at least one of the operations may be executed in a different order or omitted, or one or more other operations may be added.

According to various embodiments of the present invention disclosed herein, it is possible to index 2D location data included in blockchain transaction data as a K-d-B tree (generate integrity verification indexes) and verify integrity of a query result using partial Merkle trees of leaf nodes of the K-d-B tree. In addition, various effects directly or indirectly identified from the present document can be provided.

**Claims**

1. An index server, comprising:

an interface module configured to interface with a user terminal;
an index database (DB) for indexing transaction data stored in a blockchain network in block units; and
a processor,
wherein the processor indexes two-dimensional (2D) location data included in the transaction data as a K-d-B tree, constructs partial Merkle trees for a group of leaf nodes in the K-d-B tree, stores hierarchical hash information based on the partial Merkle trees in each of nodes of the K-d-B tree,
when a query related to the location data is acquired through the interface module, searches the K-d-B tree to search a query result corresponding to the acquired query,
generates verification data for verifying the searched query result on the basis of the partial Merkle trees and the hierarchical hash information, and
provides the query result and the verification data to the user terminal to verify integrity of the query result using the partial Merkle trees and the hierarchical hash information by the user terminal.

2. The index server of claim 1, wherein, in the K-d-B tree, internal nodes including a root node for storing spatial partition information of the location data, page identifiers (IDs), and the hierarchical hash information acquired by concatenating all data hashes of lower nodes, and
each of the leaf nodes in the K-d-B tree stores the location data, transaction IDs of the transaction data, and construction-related information of a partial Merkle tree of each of the leaf nodes.

3. The index server of claim 1 or 2, wherein, when the processor generates the verification data including hash information of nodes visited during a search process, uppermost hash information of nodes other than the visited nodes, hash information related to construction of a partial Merkle tree of a searched leaf node in the query result, and original root hash information of the K-d-B tree, to calculate root hash information of the K-d-B tree using the partial Merkle tree of the searched leaf node and the hierarchical hash information and to verify the integrity of the query result on the basis of the calculated hash information and the original root hash information by the user terminal.

4. The index server of claim 3, wherein the processor generates the verification data including minimum hash information that is a plurality of hash information in the verification data other than hash information calculable by the user terminal using a public key or a hash function.

5. The index server of claim 3 or 4, wherein, when the processor generates and provides the verification data further including a signed copy of the original root hash information encrypted using a secret key, by the user terminal, to be verified integrity of the original root hash information using a previously acquired public key and the signed copy and then verify the integrity of the index DB on the basis of the verified original root hash information.

6. The index server of one of claims 1 to 5, wherein, when the processor further stores the location data of each leaf node in the K-d-B tree and axis-specific neighbor data including x-axis next location data and y-axis next location data of the location data, to verify completeness of the index DB on the basis of distinguishment between each of the location data and the axis-specific neighbor data by the user terminal.

7. The index server of claim 6, wherein the processor signs the axis-specific neighbor data using a secret key and stores the signed axis-specific neighbor data in each leaf node of the K-d-B tree in connection with each of the location data.

8. The index server of claim 6 or 7, wherein, when the processor provides the verification data further including location data included in the query result and the axis-specific neighbor data of the location data to the user terminal to verify the completeness of the query result in connection with the location data corresponding to the query result and the neighbor data by the user terminal.

9. The index server of one of claims 1 to 8, wherein the processor provides the query result in response to the query corresponding to at least one of an exact-matching query, a range query, and a k-nearest neighbor (k-NN) search query.

10. The index server of one of claims 1 to 9, wherein, when an indexing range is set in the blockchain network, the processor calculates at least one cost for transaction data corresponding to the indexing range among a storage cost of the index DB, a calculation cost of the index DB, a generation cost of the verification data, and a reliability verification cost of the query result and outputs the calculated cost.

11. The index server of claim 10, wherein the processor periodically checks whether the transaction data within the set range is updated, calculates the at least one cost for updated transaction data, and outputs the calculated cost.

12. A user terminal, comprising:

a communication module configured to establish a communication channel to an index server which manages an index database (DB) for indexing of transaction data stored in a blockchain network; and
a processor,
wherein the index DB indexes two-dimensional (2D) location data included in the transaction data as a K-d-B tree, constructs partial Merkle trees for a group of leaf nodes in the K-d-B tree, and provides hierarchical hash information of the K-d-B tree on the basis of the partial Merkle trees in connection with each of nodes in the K-d-B tree, and
the processor transmits a query related to the location data via the communication module,
receives a query result and verification data which is provided by the index server as a result of searching the K-d-B tree for the query result wherein verification data includes the hierarchical hash information and construction-related information of the partial Merkle trees; and the query result includes searched leaf node;
calculates root hash information of the K-d-B tree related to a searched leaf node using construction-related information and the hierarchical hash information, and
verifies integrity of the query result on the basis of the calculated root hash information.

13. The user terminal of claim 12, wherein the verification data includes hash information of nodes visited by the index server during a search process for the query result, uppermost hash information of nodes other than the visited nodes, construction-related information of the partial Merkle tree of the searched leaf node, and original root hash information, and
the processor calculates hash information of leaf nodes related to the searched leaf node on the basis of the verification data, calculates root hash information of the K-d-B tree using the calculated hash information and the hierarchical hash information, and compares the calculated root hash information with the original root hash information to verify the integrity of the query result.

14. The user terminal of claim 13, wherein the verification data further includes a signed copy of the root hash information encrypted using a secret key, and
the processor verifies integrity of the original root hash information using a previously acquired public key and the signed copy and then compares the verified original root hash information with the calculated root hash information.

15. The user terminal of claim 12 or 13, wherein the verification data further includes location data of each leaf node in the K-d-B tree and axis-specific neighbor data including x-axis next location data and y-axis next location data of the location data, and
the processor verifies completeness of the index DB on the basis of continuity between location data included in the searched leaf node and the axis-specific neighbor data.

## FIG. 1

□ : Verification objects

q : Query Result

Root = $h(h_{1234} || h_{5678})$

INTERNAL NODE

$h_{1234} = h(h_{12} || h_{34})$

$h_{5678} = h(h_{56} || h_{78})$

$h_{12} = h(h_1 || h_2)$   $h_{34} = h(h_3 || h_4)$   $h_{56} = h(h_5 || h_6)$   $h_{78} = h(h_7 || h_8)$

LEAF NODE

q

$h_1 = h(t_1)$   $h_2 = h(t_2)$   $h_3 = h(t_3)$   $h_4 = h(t_4)$   $h_5 = h(t_5)$   $h_6 = h(t_6)$   $h_7 = h(t_7)$   $h_8 = h(t_8)$

## FIG. 2

10

100

Manager
Davice

200

Index
Server

Query

Respond

300

User
Terminals

# FIG. 3

# FIG. 4

## FIG. 5

## FIG. 6

FIG. 7

# FIG. 8

3 types of query examples: exact matching range, k-NN query

# FIG. 9

SEARCH PERFORM ON QUERY exact matching = q = p17(65,65)

# FIG. 10

SEARCH PERFORM ON QUERY range query = q = p2, p3, p4

# FIG. 11

EP 4 708 066 A1

**100** — Data owner (SK$_o$, PK$_o$)

**200** — Server

**300** — Clients

### Data owner

2-dimensional data: $x_1$ $x_2$ $x_3$ $x_4$

⟹

Merkle Tree Construction (tree with $h_{root}$, $h_{1,2}$, $h_{3,4}$, $h_1$, $h_2$, $h_3$, $h_4$, leaves $x_1$, $x_2$, $x_3$, $x_4$)

$$h_i = H(x_i) \quad h_{i,j} = H(h_i \| h_j)$$
Collision-resistant Hash function

$$s_{root} = S(SK_o, h_{root})$$
Digital Signature

### Server

Store ⟹

$S_{root}$

Merkle tree with $h_{root}$, $h_{1,2}$, $h_{3,4}$, $h_1$, $h_2$, $h_3$, $h_4$, leaves $x_1$, $x_2$, $x_3$, $x_4$

⟸ Query

Respond ⟹

$x_2$ $x_3$
$\{h_1, h_4, h_{root}, s_{root}\}$
Verified Objeck

### Clients

Signature check

$$V(PK_o, s_{root}, h_{root}) \begin{cases} \text{Valid} \\ \text{Invalid} \end{cases}$$

Compute Merkle Root

$$h'_{1,2} = H(h_1 \| H(x_2))$$
$$h'_{3,4} = H(H(x_3) \| h_4)$$
$$h'_{root} = H(h'_{1,2} \| h'_{3,4})$$

$$h_{root} = h'_{root}$$

↓

Guarantee correctness

# FIG. 12

EP 4 708 066 A1

# FIG. 13

| COST | MATHEMATICAL EXPRESSION |
|---|---|
| Storage cost | $C_S^{2D} = P \cdot \dfrac{f^d - 1}{f - 1} + 2N_D \cdot |s|$ |
| Construction cost | $C_C^{2D} = N_D \cdot (2C_{H(|r|)} + 2C_{2|h|}) + \dfrac{C_S^{2D}}{P} \cdot C_{IO}$ |
| VO Construction cost | $C_q^{2D} = \left( N_Q + d - 1 + \dfrac{N_R \cdot |r|}{P} + \dfrac{2 \cdot N_R \cdot |s|}{P} \right) \cdot C_{IO} + C_S{}^\pi$ |
| Authentication cost | $C_V^{2D} = N_r \cdot C_{H(|r|)} + C_m{}^\pi + C_{V_{|h|}}$ |

FIG. 14

FIG. 15

300

350

320

310

COMMUNICATION MODULE ←→ PROCESSOR ←→ INPUT DEVICE

←→ OUTPUT DEVICE

330

↕

MEMORY

340

# FIG. 16

START

INDEX TRANSACTION DATA AS K-D-B TREE BASED ON 2D LOCATION DATA IN BLOCKCHAIN TRANSACTION DATA — 1610

CONSTRUCT PARTIAL MERKLE TREES FOR GROUP OF LEAF NODES IN K-D-B TREE — 1620

STORE HIERARCHICAL HASH INFORMATION BASED ON PARTIAL MERKLE TREES IN EACH NODES IN K-D-B- TREE — 1630

WHEN USER QUERY IS ACQUIRED, SEARCH FOR QUERY RESULT CORRESPONDING TO QUERY — 1640

GENERATE VERIFICATION DATA CORRESPONDING TO QUERY RESULT — 1650

PROVIDE QUERY RESULT AND VERIFICATION DATA TO USER TERMINAL — 1660

END

Europäisches
Patentamt

European
Patent Office

Office européen
des brevets

## EUROPEAN SEARCH REPORT

**Application Number**

EP 25 19 4349

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NURGALIEV ILDAR ET AL: "Enabling Blockchain for Efficient Spatio-Temporal Query Processing", 20 October 2018 (2018-10-20), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 36 - 51, XP047491658, ISBN: 978-3-540-74549-5 [retrieved on 2018-10-20] | 1,2, 6-12,15 | INV. G06F16/22 |
| A | * abstract; figures 1,2 * <br> * page 40 * <br> * page 42, paragraph 4 * <br> * page 42, paragraph 4.2 - page 43, line 13 * <br> * page 44, line 9 - page 46, paragraph 5.1 * | 3-5,13, 14 | |
| | ----- | | |
| A | US 2020/322159 A1 (XU JIANLIANG [HK] ET AL) 8 October 2020 (2020-10-08) <br> * abstract; figures 1-2,5 * <br> * paragraph [0007] - paragraph [0008] * <br> * paragraph [0090] - paragraph [0096] * <br> * paragraph [0116] * | 1-15 | |
| | ----- | | |

**TECHNICAL FIELDS SEARCHED (IPC)**

G06F

The present search report has been drawn up for all claims

| Place of search | Date of completion of the search | Examiner |
|---|---|---|
| Berlin | 7 November 2025 | Nazzaro, Antonio |

EPO FORM 1503 03.82 (P04C01)

## ANNEX TO THE EUROPEAN SEARCH REPORT
## ON EUROPEAN PATENT APPLICATION NO.

EP 25 19 4349

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | Publication date | Patent family member(s) | Publication date |
|---|---|---|---|
| US 2020322159 A1 | 08-10-2020 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20250072754

- KR 20240120801